# EUROPÄISCHE PATENTSCHRIFT

(11) **EP 0 715 155 B1**
(45) Veröffentlichungstag und Bekanntmachung des Hinweises auf die Patenterteilung: **11.04.2001**
(21) Anmeldenummer: 94119059.7
(22) Anmeldetag: 02.12.1994
(51) Int. Cl.: G01F 1/66

(54) **Ultraschall-Durchflussmessanordnung**
Ultrasonic flowmeter
Débitmètre à ultrason

(43) Veröffentlichungstag der Anmeldung: 05.06.1996
(73) Patentinhaber: SIEMENS AKTIENGESELLSCHAFT, 80333 München (DE)
(72) Erfinder: Greppmaier, Paul, D-90475 Nürnberg (DE)

(56) Entgegenhaltungen:
- EP-A- 0 268 314
- WO-A-91/14925
- DE-C- 4 336 370
- US-A- 4 103 551

## Beschreibung

Die Erfindung betrifft eine Ultraschall-Durchflußmeßanordnung gemäß dem Oberbegriff des Anspruchs 1.

Eine Ultraschall-Durchflußmeßanordnung der eingangs genannten Art ist aus der EP 0 268 314 A1 bekannt. Diese Anordnung ist in ihrem Aufbau aufwendig, da vier Ultraschallwandler benötigt werden. Eine weitere Ultraschall-Durchflußmeßanordnung mit vier Ultraschallwandlern ist aus der US 4.103.551 bekannt. Eine Ultraschall-Durchflußmeßanordnung aus der DE-OS 40 10 148 umfaßt einen Ultraschallwandler, der ein in einem Meßkanal strömendes flüssiges oder gasförmiges Mittel beschallt, um aus der Schallaufzeit oder mittels des Dopplereffekts die Strömungsgeschwindigkeit zu bestimmen. Die Messung ist jedoch verfälscht, wenn das durch den Meßkanal strömende Mittel einen Drall um die Strömungsachse besitzt, d.h. wenn das Strömungsfeld innerhalb des Meßkanals spiralförmig ausgebildet ist. Durch am Eingang des Meßkanals angeordnete Drallbleche kann die Strömung beruhigt werden, so daß die Strömungslinien des Strömungsfeldes im Meßkanal im wesentlichen parallel zur Strömungsachse verlaufen. Bei Ultraschall-Durchflußmeßanordnungen kleiner Bauart, z.B. bei Baulängen kleiner als 130 mm, ist jedoch für den Einbau eines Drallblechs kein Platz mehr vorhanden.

Der Erfindung liegt nun die Aufgabe zugrunde, eine Ultraschall-Durchflußmeßanordnung anzugeben, die unempfindlich gegenüber einem Drall des zu messenden Mittels ist, wobei bei einem einfachen Aufbau eine kurze Meßstrecke erzielt werden soll.

Die Aufgabe wird erfindungsgemäß mit den Merkmalen des Anspruchs 1 gelöst.

Einfache Verhältnisse ergeben sich bei einer vorteilhaften Ausgestaltung, bei der der erste und der zweite Teilschallweg die Strömungsachse jeweils einmal umrunden.

Eine weitere vorteilhafte Ausgestaltung ist dadurch gekennzeichnet, daß der Richtungsumkehrreflektor in Bezug zur Strömungsachse parallel ausgerichtet und gekippt ist, so daß eine Flächennormale des Richtungsumkehrreflektors und angrenzende Stücke der beiden Teilschallwege in einer parallel zur Strömungsachse ausgerichteten Ebene liegen.

Bei einer weiteren vorteilhaften Ausgestaltung ist die Wandung in Form eines regulären sechsseitigen Prismas ausgebildet. Damit ist die Anzahl der Reflektoren zur Führung des Schallweges in beiden Richtungen um die Strömungsachse herum minimiert. Außerdem verursacht diese Ausformung der Wandung einen geringeren Druckabfall gegenüber einem rechteckigen Querschnitt beim Einfügen in Rohrleitungen mit kreisförmigem Querschnitt.

Bei einer kompakten Ultraschall-Durchflußmeßanordnung ist der Querschnitt des Meßkanals wenig eingeschränkt, wenn jeweils ein unmittelbar von den Ultraschallwandlern ausgehender Teil des Schallweges bis zu in oder an der Wandung angeordneten Raumreflektoren senkrecht zur Strömungsachse ausgerichtet ist. Der für die Raumreflektoren benötigte Kippwinkel ist nur halb so groß, als wenn die Ultraschallwandler direkt in die gewünschte Richtung ausgerichtet wären.

Eine Ausführungsform der Erfindung wird in folgenden anhand von drei Figuren erläutert. Es zeigen:
- FIG 1: eine perspektivische Ansicht einer Ultraschall-Durchflußmeßanordnung,
- FIG 2: eine Seitenansicht der in FIG 1 dargestellten Ultraschall-Durchflußmeßanordnung und
- FIG 3: den Querschnitt des Meßkanals der Ultraschall-Durchflußmeßanordnung.

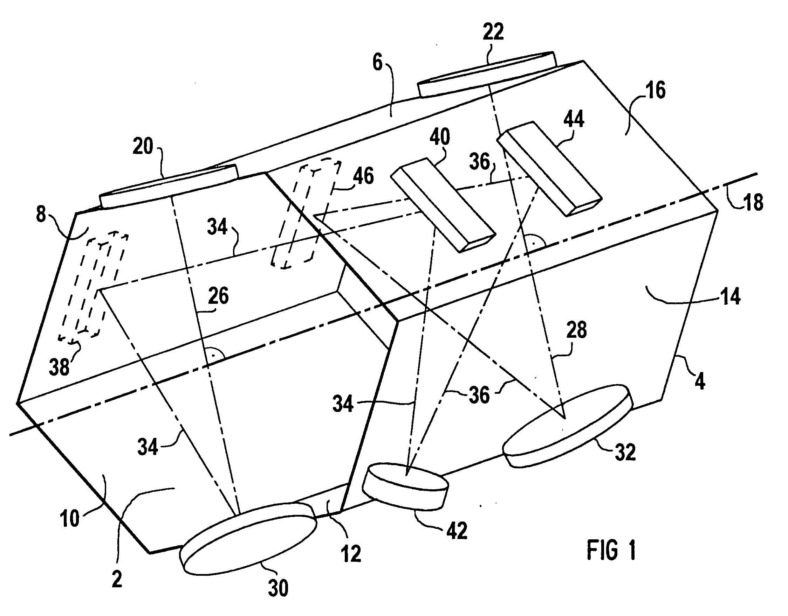

Die in FIG 1 dargestellte Ultraschall-Durchflußmeßanordnung besitzt einen Meßkanal 2 mit einem regelmäßigen sechseckigen Querschnitt. Der Meßkanal 2 ist von einer Wandung 4 begrenzt, die aus sechs gleichen, ebenen rechteckigen Wandteilen 6,8,10,12,14,16 zusammengesetzt ist. Die Symmetrieachse des durch die Wandteile 6,8,10,12,14,16 gebildeten regulären sechseckigen Prismas kann als Strömungsachse 18 bezeichnet werden. In dem Wandteil 6 sind parallel zur Oberfläche des Wandteils 6 und in Richtung der Strömungsachse 18 beabstandet zwei Ultraschallwandler 20,22 angeordnet. Die beiden Ultraschallwandler 20,22 stehen über einen Schallweg in akustischer Wechselwirkung miteinander. Das bedeutet, daß eine z. B. vom Ultraschallwandler 20 ausgesendete Schallwelle sich längs des Schallweges fortpflanzt und dann vom Ultraschallwandler 22 empfangen wird. Der Schallweg ist hier symbolisch mittels einer strichpunktierten Linie gezeichnet, die als Symmetrieachse der längs des Schallweges laufenden Schallwelle angesehen werden kann.

Den Ultraschallwandlern 20,22 gegenüber ist in der Wandung 4 jeweils ein Raumreflektor 30 bzw. 32 angeordnet. Hier sind die Raumreflektoren 30,32 im oder am Wandteil 12 auf der dem Meßkanal 2 zugewandten Seite befestigt. Alternativ können auch Oberflächenabschnitte des Wandteils 12 als Raumreflektoren 30,32 ausgebildet sein.

Die beiden von den Ultraschallwandlern 20,22 ausgehenden Abschnitte 26 bzw. 28 des Schallweges bis zu dem Raumreflektoren 30 bzw. 32 schneiden die Strömungsachse 18 unter einem rechten Winkel. Die Raumreflektoren 30 und 32 sind um eine erste Achse gekippt, die senkrecht zur Strömungsachse 18 ausgerichtet ist. Der Kippwinkel bezüglich der ersten Achse ist so gewählt, daß der zwischen den beiden Raumreflektoren 30,32 sich befindende Abschnitt des Schallweges eine Komponente in Richtung der Strömungsachse 18 besitzt. Zusätzlich sind die beiden Raumreflektoren 30,32 um die Strömungsachse 18 in Richtung des Wandteils 8 gekippt, so daß der Schallweg 24 an der Strömungsachse 18 vorbei gelenkt wird. Der Schallweg umfaßt zwei Teilschallwege 34,36, die jeweils von den Raumreflektoren 30 bzw. 32 ausgehen und gegenläufig um die Strömungsachse 18 führen. Ein erster Abschnitt des Teilschallwegs 34 verläuft bis zu einem im Wandteil 8 angeordneten ersten Umlenkreflektor 38. Der Umlenkreflektor 38 ist im Wandteil 8 parallel zur Innenfläche des Wandteils 8 ausgerichtet, so daß ein an den ersten anschließender zweiter Abschnitt des Teilschallwegs 34 bis zu einem zweiten Umlenkreflektor 40 parallel zum Wandteil 6 verläuft. In einem anschließenden dritten Abschnitt verläuft der Teilschallweg 34 bis zu einem Richtungsumkehrreflektor 42 parallel zum Wandteil 14.

Der Richtungsumkehrreflektor 42 ist im Wandteil 12 angeordnet und parallel zur Strömungsachse 18 ausgerichtet, jedoch um die Strömungsachse 18 so gekippt, daß eine Richtungsumkehr im Schallweg erfolgt. Ein erster Abschnitt des zweiten Teilschallwegs 36 verläuft weiter bis zu einem dritten Umlenkreflektor 44 parallel zum Wandteil 14 wie der dritte Abschnitt des ersten Teilschallwegs 34. Der Richtungsumkehrreflektor 42 ist um die Strömungsachse 18 so gekippt, daß eine Flächennormale des Richtungsumkehrreflektors 42 und angrenzende Abschnitte der beiden Teilschallwege 34,36 in einer parallel zur Strömungsachse 18 ausgerichteten Ebene liegen. Ein anschließender zweiter Abschnitt des Teilschallwegs 36 verläuft vom dritten Umlenkreflektor 44 bis zu einem im Wandteil 8 angeordneten vierten Umlenkreflektor 46 parallel zum Wandteil 6. In seinem dritten Abschnitt ist der Teilschallweg 36 vom vierten Umlenkreflektor 46 bis zum Raumreflektor 32 parallel zum Wandteil 10 geführt.

Als Ultraschallwandler 20,22 können herkömmliche metallgekapselte Piezoschwinger verwendet werden, die in Ausnehmungen der Wandung 4 eingesetzt sind. Die Wandung 4 kann in zwei verschiedenen Arten ausgeführt sein. Bei einer ersten Art besteht die Wandung 4 aus einem Kunststoff, z.B. dem unter dem Warenzeichen "Ultem" bekannten Kunststoff von der Fa. General Electric Plastics. Die Reflektoren 38,40,42,44,46 bestehen bei dieser Art aus durch Messinggehäuse gekapselte Edelstahlplättchen. Die Reflektoren 38,40,42,44,46 sind an der Innenseite in die Wandung in durch die Reflexionswinkel bestimmte Abstände eingelassen. Bei der zweiten Art, die gegenüber der ersten Art für Messungen von heißeren flüssigen oder gasförmigen Mitteln geeignet ist, besteht die Wandung 4 aus einer Kupfer-Aluminium-Legierung, bei der innen Teile der Wandung 4, nach einer entsprechenden Oberflächenbearbeitung, als Reflektoren 38,40,42,44,46 verwendet werden.

Der Verlauf einer Schallwelle zur drallunabhängigen Messung des Durchflusses ergibt sich somit wie folgt beschrieben, wenn beispielsweise der Ultraschallwandler 20 als Sendewandler und der Ultraschallwandler 22 als Empfangswandler 22 arbeitet. Der Ultraschallwandler 20 strahlt die Schallwelle zunächst senkrecht zur Strömungsrichtung oder Strömungsachse 18 in den Meßkanal 2 ab. Die eigentliche Meßstrecke beginnt mit dem ersten Teilschallweg 34 am Raumreflektor 30 und endet mit dem zweiten Teilschallweg 36 am Raumreflektor 32. Der erste Raumreflektor 30 lenkt die Schallwelle zum einen in Strömungsrichtung und zum anderen an der Strömungsachse 18 vorbei. Durch den ersten und zweiten Umlenkreflektor 38 und 40 wird die Schallwelle in ihrem Fortschreiten in Richtung Empfangswandler 22 zusätzlich in einer ersten Richtung einmal vollständig um die Strömungsachse 18 herumgelenkt. Die Richtungsumkehr um die Strömungsachse 18 wird durch den Richtungsumkehrreflektor 42 bewirkt. Damit verläuft entgegengesetzt zur ersten Richtung die Schallwelle in einer zweiten Richtung um die Strömungsachse 18 herum weiter. Die vollständige Umrundung um die Strömungsachse 18 bewirken der dritte und vierte Umlenkreflektor 44 und 46 bis die Schallwelle vom Raumreflektor 32 wieder senkrecht zur Strömungsachse 18 zum Empfangswandler 32 reflektiert wird. Das Empfangssignal kann dann entweder nach seiner Laufzeit oder nach seiner Doppler-Frequenzverschiebung zur Bestimmung der Strömungsgeschwindigkeit und unter Berücksichtigung des Querschnitts auch des Durchflusses des durchströmenden Mittels ausgewertet werden. Ein Drall im zu messenden Mittel beeinflußt wegen der Richtungsumkehr im Schallweg das Meßsignal nicht.

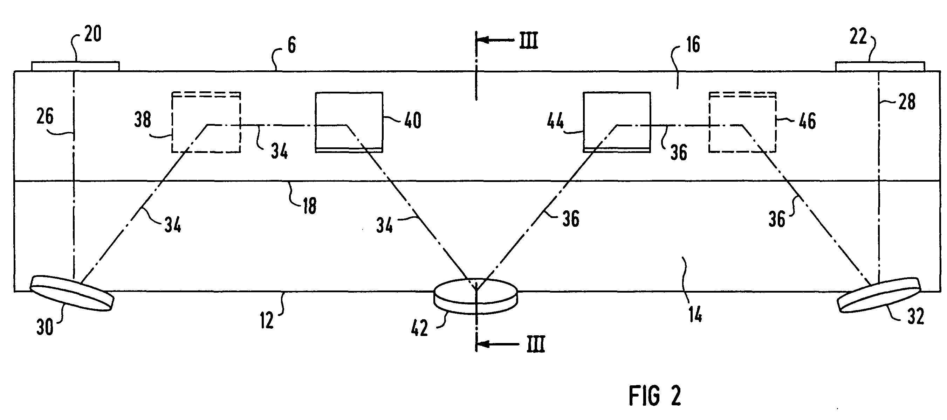

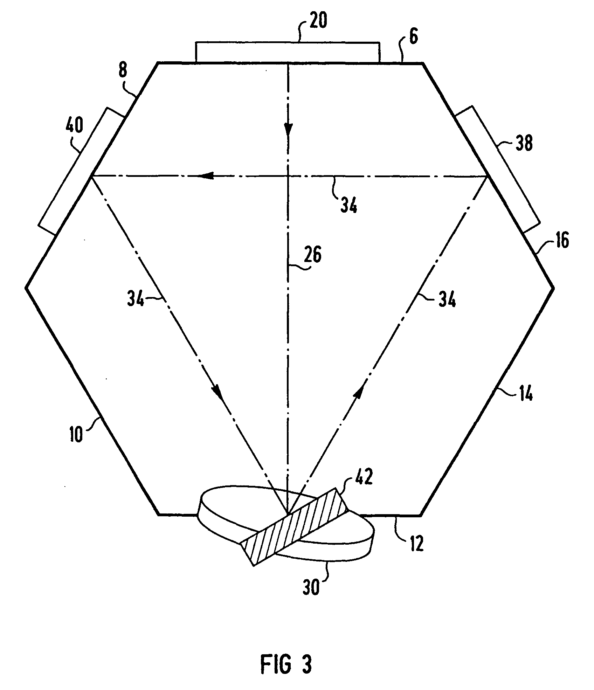

In den FIG 2 und 3 ist die symmetrische Führung des Schallwegs zu erkennen. Die Seitenansicht der FIG 2 zeigt die Komponente des Schallwegs in Richtung der Strömungsachse 18, die durch die Kippung der Raumreflektoren 30,32 um die erste Achse erzeugt und wieder aufgehoben wird. Der Richtungsumkehrreflektor 42 ist lediglich um die Strömungsachse 18 gekippt, wodurch die Teilschallwege 34 und 36 spiegelsymmetrisch zueinander ausgebildet sind.

FIG 3 zeigt im Querschnitt den Abschnitt 26 und den Teilschallweg 34 von der Mitte des Meßkanals 2 in Richtung zum Ultraschallwandler 20. Der Teilschallweg 34 ist durch die Umlenkreflektoren 38,40 dreieckförmig um die Strömungsachse 18 geführt. Die einzelnen Abschnitte des Teilschallwegs 34 verlaufen parallel zu den Wandteilen 14,6,10. Der Teilschallweg 34 beginnt am Raumreflektor 30 und endet in der Mitte des Richtungsumkehrreflektors 42. Zu erkennen ist hier auch, daß der Abschnitt 26 des Schallwegs die Strömungsachse 18 schneidet.

## Patentansprüche

1. Ultraschall-Durchflußmeßanordnung
- mit einem von einer Wandung (4) seitlich begrenzten Meßkanal (2), wobei der Meßkanal (2) eine Strömungsachse (18) für ein flüssiges oder gasförmiges Mittel definiert,
- mit zwei in Richtung der Strömungsachse (18) beabstandeten Ultraschallwandlern (20,22), die in akustischer Wechselwirkung miteinander stehen,
- mit einem ersten Teilschallweg (34), der in einer ersten Richtung um die Strömungsachse (18) herum ausgebildet ist, und einem in Richtung der Strömungsachse hinter dem ersten Teilschallweg (34) angeordneten zweiten Teilschallweg (36), der in einer zweiten, der ersten Richtung entgegengesetzten Richtung um die Strömungsachse (18) herum ausgebildet ist,
**dadurch gekennzeichnet,**
- daß die beiden Teilschallwege (34,36) unmittelbar aufeinander folgen und einen gemeinsamen durch den Meßkanal (2) führenden Schallweg bilden,
- daß der gemeinsame Schallweg für die akustische Wechselwirkung zwischen den nur zwei Ultraschallwandlern (20,22) dient und zwischen diesen liegt, und
- daß an der Grenze der beiden Teilschallwege (34,36) ein Richtungsumkehrreflektor (42) angeordnet ist, durch den die Richtungsumkehr zwischen dem ersten und dem zweiten Teilschallweg (34 bzw. 36) erzeugt ist.

2. Ultraschall-Durchflußmeßanordnung nach Anspruch 1, **dadurch gekennzeichnet**, daß der erste und der zweite Teilschallweg (34 bzw. 36) die Strömungsachse (18) jeweils einmal umrunden.

3. Ultraschall-Durchflußmeßanordnung nach Anspruch 1 oder 2, **dadurch gekennzeichnet**, daß die beiden Teilschallwege (34,36) spiegelsymmetrisch gleich sind.

4. Ultraschall-Durchflußmeßanordnung nach Anspruch 1, 2 oder 3, **dadurch gekennzeichnet**, daß der Richtungsumkehrreflektor (42) in Bezug zur Strömungsachse (18) parallel ausgerichtet und gekippt ist, so daß eine Flächennormale des Richtungsumkehrreflektors (42) und angrenzende Abschnitte der beiden Teilschallwege (34,36) in einer parallel zur Strömungsachse (18) ausgerichteten Ebene liegen.

5. Ultraschall-Durchflußmeßanordnung nach einem der Ansprüche 1 bis 4, **dadurch gekennzeichnet**, daß die Wandung (4) aus ebenen Wandteilen (6,8,10,12,14,16) aufgebaut ist.

6. Ultraschall-Durchflußmeßanordnung nach Anspruch 5, **dadurch gekennzeichnet**, daß beide Ultraschallwandler (20,22) in oder an einem Wandteil (6) angeordnet sind.

7. Ultraschall-Durchflußmeßanordnung nach Anspruch 5 oder 6, **dadurch gekennzeichnet**, daß die Wandteile (6,8,10,12,14,16) gleich ausgebildet sind und den Meßkanal (2) in Form eines regulären Prismas begrenzen.

8. Ultraschall-Durchflußmeßanordnung nach einem der Ansprüche 1 bis 7, **dadurch gekennzeichnet**, daß die Wandung (4) den Meßkanal (2) in Form eines regulären sechsseitigen Prismas begrenzt.

9. Ultraschall-Durchflußmeßanordnung nach einem der Ansprüche 1 bis 8, **dadurch gekennzeichnet**, daß jeweils ein unmittelbar von den Ultraschallwandlern (20,22) ausgehendes Stück (26,28) des Schallweges bis zu in oder an der Wandung (4) angeordnete Raumreflektoren (30,32) senkrecht zur Strömungsachse (18) ausgerichtet ist.

10. Ultraschall-Durchflußmeßanordnung nach Anspruch 9, **dadurch gekennzeichnet**, daß die Teilschallwege (34,36) zwischen den beiden Raumreflektoren (30,32) angeordnet sind.

11. Ultraschall-Durchflußmeßanordnung nach Anspruch 10, **dadurch gekennzeichnet**, daß die beiden Raumreflektoren (30,32) bezüglich der Strömungsachse (18) und senkrecht dazu gekippt angeordnet sind.

12. Ultraschall-Durchflußmeßanordnung nach einem der Ansprüche 9 bis 11, **dadurch gekennzeichnet**, daß jeweils zwischen dem Raumreflektor (30 bzw. 32) und dem Richtungsumkehrreflektor (42) zwei Umlenkreflektoren (38,40 bzw. 44,46) an oder in der Wandung (4) angeordnet sind.

## Claims

1. Ultrasonic flow-meter arrangement
- with a measuring channel (2) laterally limited by a wall (4), with the measuring channel (2) defining an axis of flow (18) for a liquid or gaseous medium,
- with two ultrasonic transducers (20, 22) spaced apart in the direction of the axis of flow (18) and being in a state of acoustic interaction with each other,
- with a first partial sonic distance (34) which is constructed in a first direction around the axis of flow (18), and a second partial sonic distance (36) arranged in the direction of the axis of flow after the first partial sonic distance (34), the second partial sonic distance being constructed in a second direction, opposite to the first direction, around the axis of flow (18),
characterized in that
- the two partial sonic distances (34, 36) succeed each other directly and form a common sonic distance leading through the measuring channel (2),
- the common sonic distance serves the acoustic interaction between the only two ultrasonic transducers (20, 22) and lies between them, and
- at the limit of the two partial sonic distances (34, 36) a reversal reflector (42) is arranged, by means of which the reversal between the first and the second partial sonic distance (34 and 36) is generated.

2. Ultrasonic flow-meter arrangement according to claim 1, characterized in that the first and the second partial sonic distance (34 and 36) orbit the axis of flow (18) in each case once.

3. Ultrasonic flow-meter arrangement according to claim 1 or 2, characterized in that the two partial sonic distances (34, 36) are mirror-symmetrically the same.

4. Ultrasonic flow-meter arrangement according to claim 1, 2 or 3, characterized in that the reversal reflector (42) is aligned in parallel with respect to the axis of flow (18) and is tilted, so that a surface normal of the reversal reflector (42) and adjoining sections of the two partial sonic distances (34, 36) lie in a plane aligned in parallel with the axis of flow (18).

5. Ultrasonic flow-meter arrangement according to one of claims 1 to 4, characterized in that the wall (4) is assembled from even wall parts (6, 8, 10, 12, 14, 16).

6. Ultrasonic flow-meter arrangement according to claim 5, characterized in that both ultrasonic transducers (20, 22) are arranged in or on a wall part (6).

7. Ultrasonic flow-meter arrangement according to claim 5 or 6, characterized in that the wall parts (6, 8, 10, 12, 14, 16) are constructed to be equal and limit the measuring channel (2) in the form of a regular prism.

8. Ultrasonic flow-meter arrangement according to one of claims 1 to 7, characterized in that the wall (4) limits the measuring channel (2) in the form of a regular hexagonal prism.

9. Ultrasonic flow-meter arrangement according to one of claims 1 to 8, characterized in that in each case a part (26, 28) of the sonic distance, which issues directly from the ultrasonic transducers (20, 22) as far as space reflectors (30, 32) arranged in or on the wall (4), is aligned perpendicular to the axis of flow (18).

10. Ultrasonic flow-meter arrangement according to claim 9, characterized in that the partial sonic distances (34, 36) are arranged between the two space reflectors (30, 32).

11. Ultrasonic flow-meter arrangement according to claim 10, characterized in that the two space reflectors (30, 32) are arranged tilted with respect to the axis of flow (18) and tilted perpendicular thereto.

12. Ultrasonic flow-meter arrangement according to one of claims 9 to 11, characterized in that two deflecting reflectors (38, 40 and 44, 46) are arranged on or in the wall (4) in each case between the space reflector (30 and 32) and the reversal reflector (42).

## Revendications

1. Débitmètre à ultrason
- comprenant un canal (2) de mesure délimité latéralement par une paroi (4), le canal (2) de mesure définissant un axe (18) d'écoulement pour un agent liquide ou gazeux,
- comprenant deux transducteurs (20, 22) ultrasonores à distance l'un de l'autre dans la direction de l'axe (18) d'écoulement et en coopération acoustique l'un avec l'autre,
- comprenant un premier sous-trajet (34) du son qui est constitué dans un premier sens autour de l'axe (18) d'écoulement et un second sous-trajet (36) du son disposé en aval dans la direction de l'axe d'écoulement du premier sous-trajet (34) du son et constitué dans un second sens autour de l'axe (18) d'écoulement qui est opposée au premier sens,
caractérisé
- en ce que les deux sous-trajets (34, 36) du son se succèdent directement et forment ensemble un trajet du son passant dans le canal (2) de mesure,
- en ce que le trajet commun du son sert à la coopération acoustique entre les seulement deux transducteurs (20, 22) ultrasonores et se trouve entre ceux-ci et
- en ce que, à la limite des deux sous-trajets (34, 36) du son, est prévu un réflecteur (42) d'inversion de sens par lequel est produit le changement de sens entre le premier sous-trajet (34) et le second sous-trajet (36) du son.

2. Débitmètre à ultrason suivant la revendication 1, caractérisé en ce que le premier et le second sous-trajet (34 et 36) du son entourent respectivement une fois l'axe (18) d'écoulement.

3. Débitmètre à ultrason suivant la revendication 1 ou 2, caractérisé en ce que les deux sous-trajets (34, 36) du son sont identiques en étant symétriques comme en un miroir.

4. Débitmètre à ultrason suivant la revendication 1, 2 ou 3, caractérisé en ce que le réflecteur (42) d'inversion de sens est dirigé parallèlement à l'axe (18) d'écoulement et est incliné de sorte qu'une normale à la surface du réflecteur (42) d'inversion de sens et des tronçons adjacents des deux sous-trajets (34, 36) du son se trouvent dans un plan parallèle à l'axe (18) d'écoulement.

5. Débitmètre à ultrason suivant l'une des revendications 1 à 4, caractérisé en ce que la paroi (4) est constituée de parties (6, 8, 10, 12, 14, 16) planes de paroi.

6. Débitmètre à ultrason suivant la revendication 5, caractérisé en ce que les deux transducteurs (20, 22) ultrasonores sont montés dans une partie (6) de paroi ou sur une partie (6) de paroi.

7. Débitmètre à ultrason suivant la revendication 5 ou 6, caractérisé en ce que les parties (6, 8, 10, 12, 14, 16) de paroi sont identiques et délimitent le canal (2) de mesure sous la forme d'un prisme régulier.

8. Débitmètre à ultrason suivant l'une des revendications 1 à 7, caractérisé en ce que la paroi (4) délimite le canal (2) de mesure sous la forme d'un prisme régulier à six faces.

9. Débitmètre à ultrason suivant l'une des revendications 1 à 8, caractérisé en ce qu'un bout (26, 28) du trajet du son partant directement des transducteurs (20, 22) ultrasonores jusqu'à des réflecteurs (30, 32) disposés dans la paroi (4) ou sur la paroi (4) est dirigé perpendiculairement à l'axe (18) d'écoulement.

10. Débitmètre à ultrason suivant la revendication 9, caractérisé en ce que les sous-trajets (34, 36) du son sont interposés entre les deux réflecteurs (30, 32).

11. Débitmètre à ultrason suivant la revendication 10, caractérisé en ce que les deux réflecteurs (30, 32) sont inclinés par rapport à l'axe (18) d'écoulement et perpendiculairement à celui-ci.

12. Débitmètre à ultrason suivant l'une des revendications 9 à 11, caractérisé en ce qu'entre le réflecteur (30 ou 32) et le réflecteur (42) de changement de direction sont montés sur la paroi ou dans la paroi (4) deux réflecteurs (38, 40 et 44, 46) de renvoi.
